# FASCICULE DE BREVET EUROPEEN

(11) **EP 1 433 405 B1**
(45) Date de publication et mention de la délivrance du brevet: **25.01.2006**
(21) Numéro de dépôt: 03293197.4
(22) Date de dépôt: 17.12.2003
(51) Int. Cl.: A47J 37/07, A47J 37/06

(54) **Dispositif de sécurité d'un sous-ensemble chauffant amovible adapté à être positionné sur un corps principal d'un appareil de cuisson**
Sicherheitsvorrichtung eines abnehmbaren Heizelementes, das auf dem Gehäuse eines Kochgerätes positioniert werden kann
Security device of a removable heating element suitable to be placed on the main body of a cooking device

(30) Priorité: 23.12.2002 FR 0216496
(43) Date de publication de la demande: 30.06.2004
(73) Titulaire: SEB S.A., 69130 Ecully (FR)
(72) Inventeur: Dauvergne, François, 74600 Seynod (FR)
(74) Mandataire: Pichat, Thierry

(56) Documents cités:
- EP-A- 0 617 909
- US-A- 3 623 422
- US-A- 5 621 198
- US-A- 6 104 004

## Description

La présente invention concerne un dispositif de sécurité d'un sous-ensemble chauffant, celui-ci comportant un organe de chauffe et des moyens de commande manuelle de l'alimentation électrique de l'organe de chauffe, étant amovible et adapté à être positionné sur un corps principal d'un appareil de cuisson tel qu'un barbecue électrique.

Un tel dispositif de sécurité, imposé depuis peu par des normes en la matière, empêche la mise en marche du sous-ensemble chauffant lorsque celui-ci est hors de son environnement normal (c'est à dire séparé du corps principal) notamment pour faciliter le nettoyage des surfaces du corps principal situées en regard de l'organe de chauffe et soumises aux projection de graisses pendant la cuisson d'aliments.

On connaît un dispositif de sécurité comportant un interrupteur électrique placé dans le sous-ensemble chauffant, relié au circuit d'alimentation de l'organe de chauffe, et constamment sollicité en position ouverte. Le corps principal de l'appareil de cuisson comporte un ergot qui est adapté à pénétrer dans une ouverture réalisée dans le sous-ensemble chauffant et à activer l'interrupteur afin de fermer le circuit d'alimentation. Ainsi, le circuit est fermé uniquement quand le sous-ensemble est correctement posé sur le corps principal : si le sous-ensemble est posé hors du corps, le circuit est ouvert et la mise en marche de l'organe de chauffe est impossible, et si, l'organe de chauffe étant en marche, le sous-ensemble est retiré du corps principal, l'interrupteur ouvre le circuit et l'organe de chauffe n'est plus alimenté.

Toutefois, un tel dispositif présente l'inconvénient majeur d'être particulièrement cher, du fait de la nécessité de combiner des pièces mécaniques et un interrupteur, du coût de ces derniers et du câblage, et de la complexité du montage de ces pièces dans le sous-ensemble.

Le problème posé est de réaliser un dispositif de sécurité qui ne comporte pas d'interrupteur ou d'autres éléments nécessitant une connexion électrique au circuit d'alimentation de l'organe de chauffe, et qui satisfait aux mêmes exigences de sécurité, à savoir, qui autorise l'alimentation électrique de l'organe de chauffe uniquement quand le sous-ensemble chauffant est correctement positionné sur le corps principal.

Selon l'invention, le dispositif de sécurité comprend un organe de sécurité qui est mobile entre une position de blocage dans laquelle les moyens de commande manuelle sont bloqués dans leur position de coupure dans laquelle l'alimentation électrique est coupée, et une position d'activation dans laquelle les moyens de commande manuelle sont débloqués et mobiles entre leur position de coupure et une position d'alimentation dans laquelle l'organe de chauffe est alimentée, et qui est adapté à coopérer avec le corps principal, de sorte que, quand le sous-ensemble chauffant est séparé du corps principal, l'organe de sécurité est dans sa position de blocage, et, quand le sous-ensemble chauffant est positionné sur le corps principal, l'organe de sécurité est dans sa position d'activation.

Ainsi, selon la présente invention, l'organe de sécurité (qui peut n'être constitué que d'un seul élément) interdit l'alimentation de l'organe de chauffe quand le sous-ensemble chauffant n'est pas correctement positionné sur le corps principal.

Selon un mode de réalisation particulier, quand le sous-ensemble est positionné sur le corps principal, l'organe de sécurité est mobile entre sa position d'activation dans laquelle le sous-ensemble chauffant est séparable du corps principal et une position de verrouillage dans laquelle le sous-ensemble chauffant est verrouillé au corps principal, l'organe de sécurité étant adapté à coopérer avec les moyens de commande manuelle, de sorte que, quand les moyens de commande manuelle sont dans leur position de coupure, l'organe de sécurité est dans sa position d'activation, et, quand les moyens de commande manuelle sont dans leur position d'alimentation, l'organe de sécurité est dans sa position de verrouillage.

Ainsi, selon ce mode de réalisation, le même organe de sécurité interdit la séparation du sous-ensemble chauffant du corps principal quand l'organe de chauffe est alimenté.

D'autres particularités et avantages de la présente invention apparaîtront dans la description détaillée qui va suivre. Aux dessins donnés à titre d'exemple non limitatif :
- La figure 1 est une vue en perspective d'un sous-ensemble chauffant comportant un dispositif de sécurité conforme à la présente invention ;
- La figure 2 est une vue semblable à la figure 1, l'organe de sécurité étant séparé du reste du sous-ensemble chauffant ;
- La figure 3 est une vue en perspective de la partie des moyens de commande manuelle adaptée à coopérer avec l'organe de sécurité ;
- La figure 4 est une vue en coupe d'un sous-ensemble chauffant et d'une partie d'un corps principal d'un appareil de cuisson, le sous-ensemble chauffant étant séparé du corps principal ;
- La figure 5 est une vue en coupe semblable à la figure 4, le sous-ensemble chauffant étant positionné sur le corps principal de façon séparable ; et
- La figure 6 est une vue en coupe semblable aux figures 4 et 5, le sous-ensemble chauffant étant positionné sur le corps principal de façon verrouillée.

Un appareil de cuisson 1, en l'occurrence un barbecue électrique 1, comprend un corps principal 2 et un sous-ensemble chauffant 3 qui est amovible et adapté à être positionné sur le corps principal 2.

Le sous-ensemble chauffant 3 comporte un organe de chauffe 4 (en l'occurrence une résistance électrique 4), des moyens de commande manuelle 5 de l'alimentation électrique de l'organe de chauffe 4, et un dispositif de sécurité 6. Le sous-ensemble chauffant 3 comporte un boîtier 7 dans lequel sont disposés le circuit d'alimentation électrique et le dispositif de sécurité 6, et hors duquel font saillie l'organe de chauffe 4 et la partie des moyens de commande manuelle 5 adaptée à être manoeuvrée par l'utilisateur.

Les moyens de commande manuelle 5 sont mobiles entre une position de coupure et une position d'alimentation. Quand les moyens de commande manuelle 5 sont dans leur position de coupure, l'alimentation électrique de l'organe de chauffe 4 est coupée, le circuit électrique étant ouvert, et quand les moyens de commande manuelle 5 sont dans leur position d'alimentation, l'organe de chauffe 4 est alimenté, le circuit étant fermé.

Le dispositif de sécurité 6 comprend un organe de sécurité 8.

L'organe de sécurité 8 est mobile entre une position de blocage et une position d'activation. Quand l'organe de sécurité 8 est dans sa position de blocage, les moyens de commande manuelle 5 sont bloqués dans leur position de coupure, et quand l'organe de sécurité 8 est dans sa position d'activation, les moyens de commande manuelle 5 sont débloqués et peuvent être entraînés dans leur position d'alimentation. Ainsi, quand l'organe de sécurité 8 est dans sa position de blocage, l'alimentation électrique de l'organe de chauffe 4 est coupée, et quand l'organe de sécurité 8 est dans sa position d'activation, l'organe de chauffe 4 peut être alimenté.

L'organe de sécurité 8 est adapté à coopérer avec le corps principal 2, de sorte que, quand le sous-ensemble chauffant 3 est séparé du corps principal 2 (ou, plus exactement, non positionné de façon adéquate sur le corps principal 2), l'organe de sécurité 8 est dans sa position de blocage, et, quand le sous-ensemble chauffant 3 est positionné sur le corps principal 2 (ou, plus exactement, positionné de façon adéquate sur le corps principal 2), l'organe de sécurité 8 est dans sa position d'activation. Ainsi, quand le sous-ensemble chauffant 3 est séparé du corps principal 2, l'alimentation électrique de l'organe de chauffe 4 est coupée, et quand le sous-ensemble chauffant 3 est positionné sur le corps principal 2, l'organe de chauffe 4 peut être alimenté.

Ainsi, quand le sous-ensemble chauffant 3 est séparé du corps principal 2, l'organe de chauffe 4 ne peut pas être alimenté.

De plus, quand le sous-ensemble chauffant 3 est positionné sur le corps principal 2, l'organe de sécurité 8 est mobile entre sa position d'activation et une position de verrouillage. Quand l'organe de sécurité 8 est dans sa position d'activation, le sous-ensemble chauffant 3 peut être séparé du corps principal 2 sur lequel il est positionné, et, quand l'organe de sécurité 8 est dans sa position de verrouillage, le sous-ensemble chauffant 3 est verrouillé au corps principal 2 et ne peut pas en être séparé.

L'organe de sécurité 8 est adapté à coopérer avec les moyens de commande manuelle 5, de sorte que, quand les moyens de commande manuelle 5 sont dans leur position de coupure, l'organe de sécurité 8 est dans sa position d'activation, et, quand les moyens de commande manuelle 5 sont dans leur position d'alimentation, l'organe de sécurité 8 est dans sa position de verrouillage. Ainsi, quand les moyens de commande manuelle 5 sont dans leur position de coupure, le sous-ensemble chauffant 3 peut être séparé du corps principal 2, et, quand les moyens de commande manuelle 5 sont dans leur position d'alimentation, le sous-ensemble chauffant 3 est verrouillé au corps principal 2.

Ainsi, quand l'organe de chauffe 4 est alimenté, le sous-ensemble chauffant 3 ne peut être séparé du corps principal 2.

Dans le présent exemple, l'organe de sécurité 8 est une pièce monobloc et mobile, par rapport au sous-ensemble chauffant 3, dans le boîtier 7, par rotation autour d'un axe de rotation 9. De même, les moyens de commande manuelle 5 (en l'occurrence un bouton de commande) sont mobiles, par rapport au sous-ensemble chauffant 3, par rotation autour d'un axe 30 perpendiculaire à l'axe de rotation 9 de l'organe de sécurité 8.

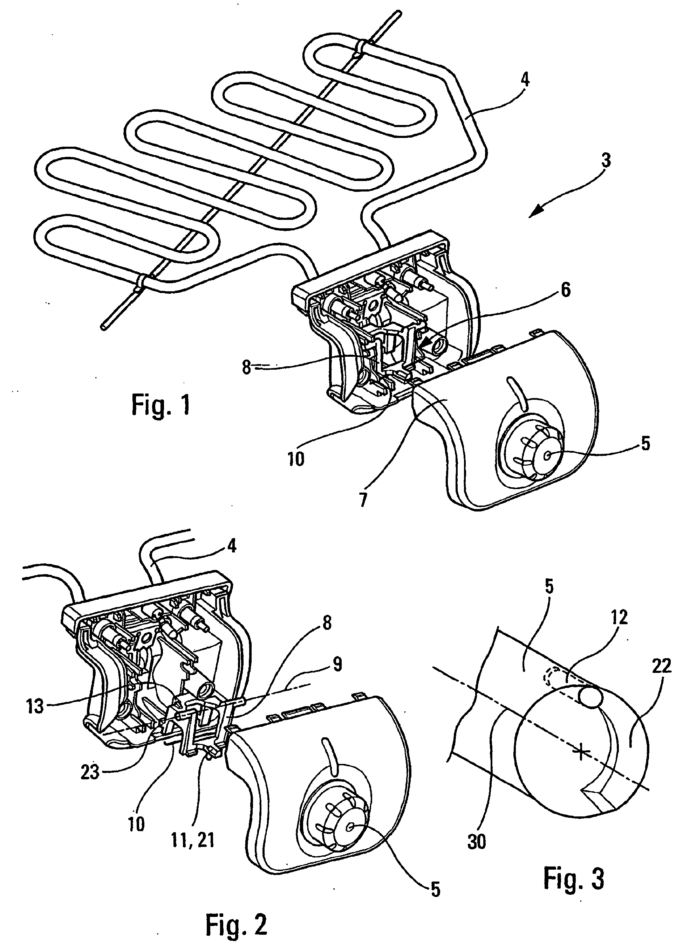

Comme on peut le voir à la figure 1, un ressort 10 qui est un fil élastique, sollicite l'organe de sécurité 8 dans sa position de blocage.

Dans le présent exemple, l'organe de sécurité 8 comporte un doigt de blocage 11 et les moyens de commande manuelle 5 comportent un orifice de blocage 12. L'orifice de blocage 12 est adapté à recevoir le doigt de blocage 11 quand, d'une part, l'organe de sécurité 8 est en position de blocage et, d'autre part, les moyens de commande manuelle 5 sont en position de coupure. De cette façon, le doigt de blocage 11 logé dans l'orifice de blocage 12 empêche tout mouvement des moyens de commande manuelle 5 hors de leur position de coupure.

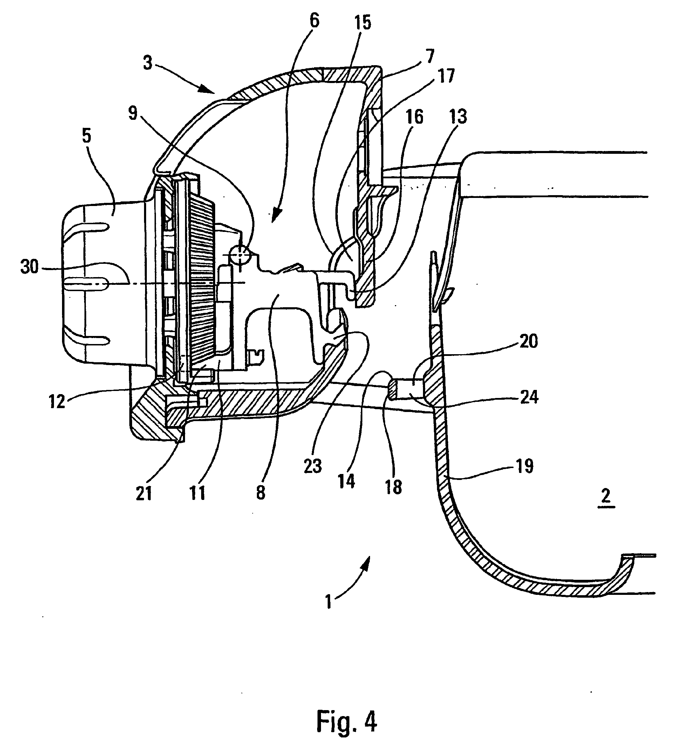

Quand le sous-ensemble 3 est séparé du corps principal 2, le ressort 10 sollicite l'organe de sécurité 8 dans sa position de blocage dans laquelle le doigt de blocage 11 logé dans l'orifice de blocage 12 bloque les moyens de commande manuelle 5 dans leur position de coupure, ce qui empêche l'alimentation de l'organe de chauffe 4 (figure 4).

Dans le présent exemple, l'organe de sécurité 8 comprend une patte d'actionnement 13 et le corps principal 2 comporte une surface d'actionnement 14. La surface d'actionnement 14 est adaptée à entrer en contact avec la patte d'actionnement 13 lors du positionnement du sous-ensemble chauffant 3 sur le corps principal 2, de façon à entraîner l'organe de sécurité 8 de sa position de blocage à sa position d'activation.

De façon plus précise, le boîtier 7 est délimité par une paroi principale 15 séparant l'intérieur du boîtier 7 de l'extérieur. Le boîtier 7 comporte en outre une paroi de positionnement 16 qui fait saillie hors de la paroi principale 15 et qui s'étend de façon sensiblement parallèle à une partie de la paroi principale 15.

La patte d'actionnement 13 est mobile dans une cavité de positionnement 17 qui est limitée, d'une part, par la paroi de positionnement 16, et, d'autre part, par la partie de la paroi principale 15 faisant face à la paroi de positionnement 16. Ainsi, la patte d'actionnement 13 est protégée de tout mouvement involontaire du à un contact avec un élément étranger.

Par ailleurs, un épaulement 18 fait saillie hors d'une paroi latérale 19 du corps principal 2. L'épaulement 18 comporte une ouverture de positionnement 20 qui est adaptée à recevoir la paroi de positionnement 16 quand le sous-ensemble chauffant 3 est positionné sur le corps principal 2.

La surface d'actionnement 14 qui est adaptée à pénétrer dans la cavité de positionnement 17, est constituée par une partie de l'épaulement 18, et plus particulièrement par l'extrémité libre de cet épaulement, au delà de l'ouverture de positionnement 20.

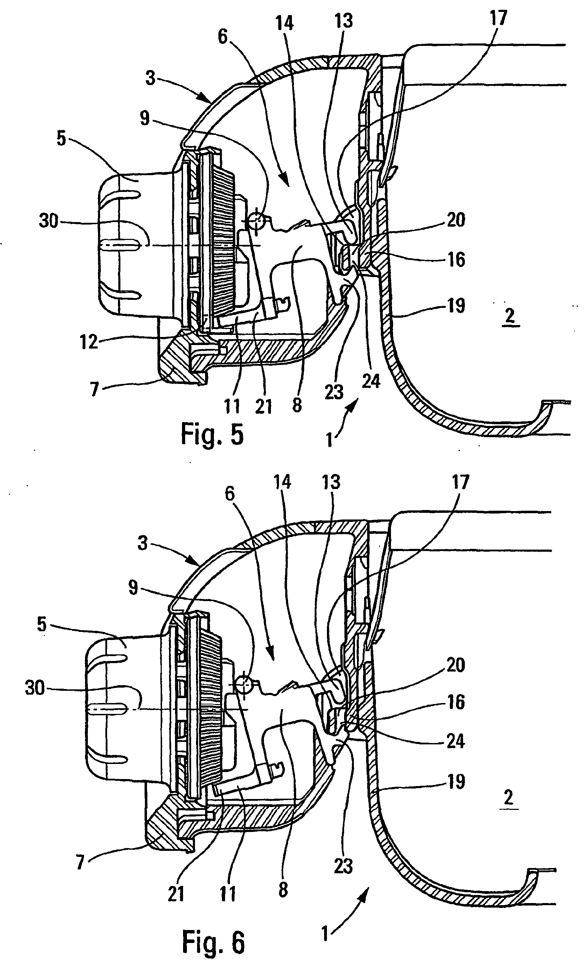

Lors du positionnement du sous-ensemble 3 sur le corps principal 2, concomitamment, la paroi de positionnement 16 et la surface d'actionnement 14 sont introduites, respectivement, dans l'ouverture de positionnement 20 et la cavité de positionnement 17. Quand elle est dans la cavité de positionnement 17, la surface d'actionnement 14 entre en contact avec la patte d'actionnement 13 de façon à entraîner le pivotement de l'organe de sécurité 8 de sa position de blocage à sa position d'activation et le retrait du doigt de blocage 11 de l'orifice de blocage 12. Ainsi, les moyens de commande manuelle 5 peuvent être entraînés dans leur position d'alimentation de façon à permettre l'alimentation de l'organe de chauffe 4 (figure 5) .

Dans le présent exemple, l'organe de sécurité 8 comporte un doigt d'entraînement 21 et les moyens de commande manuelle 5 comportent une surface d'entraînement 22. La surface d'entraînement 22 est adaptée à entrer en contact avec le doigt d'entraînement 21, lors du déplacement des moyens de commande manuelle 5 de leur position de coupure à leur position d'alimentation, de façon à entraîner l'organe de sécurité 8 de sa position d'activation à sa position de verrouillage.

Dans le présent exemple, le doigt d'entraînement 21 est constitué par le doigt de blocage 11. Comme on peut le voir à la figure 3, la surface d'entraînement 22 est constituée par une surface inclinée dont une extrémité délimite l'entrée de l'orifice de blocage 12. L'inclinaison de la surface d'entraînement 22 est telle que plus les moyens de commande manuelle 5 sont éloignés de leur position de coupure, plus l'organe de sécurité 8 est entraîné dans sa position de verrouillage, au-delà de la position d'activation.

Dans le présent exemple, l'organe de sécurité 8 comporte un ergot de verrouillage 23 et le corps principal 2 comporte une ouverture de verrouillage 24. L'ouverture de verrouillage 24 est adaptée à recevoir l'ergot de verrouillage 23 quand l'organe de sécurité 8 est dans sa position de verrouillage, le sous-ensemble chauffant 3 étant évidemment positionné sur le corps principal 2.

De façon plus précise, l'ouverture de verrouillage 24 est constituée par l'ouverture de positionnement 20 et traverse l'épaulement 18 de part en part.

Quand l'organe de sécurité 8 est en position de verrouillage, l'ergot de verrouillage 23 est adapté à pénétrer dans l'ouverture de verrouillage 24 par un premier côté de l'épaulement 18 et à venir en butée contre la paroi de positionnement 16 qui a pénétré dans l'ouverture de verrouillage 24 par l'autre côté de l'épaulement 18.

Quand le sous-ensemble 3 est positionné sur le corps principal 2, et les moyens de commande manuelle 5 sont dans leur position de coupure, l'organe de sécurité 8 est dans sa position d'activation et l'ergot de verrouillage 23 est situé hors de l'ouverture de verrouillage 24, ce qui permet la séparation du sous-ensemble chauffant 3 du corps principal 2 (figure 5).

Quand le sous-ensemble 3 est positionné sur le corps principal 2, lors du déplacement des moyens de commande manuelle 5 de leur position de coupure à leur position d'alimentation, la surface d'entraînement 22 entre en contact avec le doigt d'entraînement 21 de façon à entraîner le pivotement de l'organe de sécurité 8 de sa position de d'activation à sa position de verrouillage et l'introduction l'ergot de verrouillage 23 dans l'ouverture de verrouillage 24 suivi de sa mise en butée contre la paroi de positionnement 16. Ainsi, quand l'organe de chauffe 4 est alimenté, le sous-ensemble chauffant 3 ne peut pas être séparé du corps principal 2. (figure 6)

Lors de la coupure de l'alimentation de l'organe de chauffe 4, la surface d'entraînement 22 libère le doigt d'entraînement 21 et le ressort 10 entraîne le pivotement de l'organe de sécurité 8 dans sa position d'activation, l'organe de sécurité 8 ne pouvant pivoter vers sa position de blocage étant donné que la patte d'actionnement 13 est en contact avec la surface d'actionnement 14.

Lors de la séparation du sous-ensemble 3 du corps principal 2, les moyens de commande manuelle 5 étant dans leur position de coupure, la surface d'actionnement 14 libère la patte d'actionnement 13 et le ressort 10 entraîne l'organe de sécurité 8 dans sa position de blocage.

Bien évidemment, la présente invention n'est pas limitée au mode de réalisation décrit en détail en référence aux figures.

Il serait ainsi possible que l'organe de sécurité 8 soit mobile, par rapport au sous-ensemble chauffant 3, par translation ou par déformation.

## Revendications

1. Dispositif de sécurité (6) d'un sous-ensemble chauffant (3) amovible adapté à être positionné sur un corps principal (2) d'un appareil de cuisson (1), le sous-ensemble chauffant (3) comportant un organe de chauffe (4) et des moyens de commande manuelle (5) de l'alimentation électrique de l'organe de chauffe (4), les moyens de commande manuelle (5) étant mobiles entre une position de coupure dans laquelle l'alimentation électrique est coupée et une position d'alimentation dans laquelle l'organe de chauffe (4) est alimenté, **caractérisé en ce qu'**il comprend un organe de sécurité (8) qui est mobile entre une position de blocage dans laquelle les moyens de commande manuelle (5) sont bloqués dans leur position de coupure, et une position d'activation dans laquelle les moyens de commande manuelle (5) sont débloqués, et qui est adapté à coopérer avec le corps principal (2), de sorte que, quand le sous-ensemble chauffant (3) est séparé du corps principal (2), l'organe de sécurité (8) est dans sa position de blocage, et, quand le sous-ensemble chauffant (3) est positionné sur le corps principal (2), l'organe de sécurité (8) est dans sa position d'activation.

2. Dispositif de sécurité (6) selon la revendication 1, **caractérisé en ce que**, quand le sous-ensemble chauffant (3) est positionné sur le corps principal (2), l'organe de sécurité (8) est mobile entre sa position d'activation dans laquelle le sous-ensemble chauffant (3) est séparable du corps principal (2), et une position de verrouillage dans laquelle le sous-ensemble chauffant (3) est verrouillé au corps principal (2), l'organe de sécurité (8) étant adapté à coopérer avec les moyens de commande manuelle (5), de sorte que, quand les moyens de commande manuelle (5) sont dans leur position de coupure, l'organe de sécurité (8) est dans sa position d'activation, et, quand les moyens de commande manuelle (5) sont dans leur position d'alimentation, l'organe de sécurité (8) est dans sa position de verrouillage.

3. Dispositif de sécurité (6) selon la revendication 1 ou 2, **caractérisé en ce que** l'organe de sécurité (8) comporte un doigt de blocage (11), et **en ce que** les moyens de commande manuelle (5) comportent un orifice de blocage (12) adapté à recevoir le doigt de blocage (11) quand, d'une part, l'organe de sécurité (8) est en position de blocage et, d'autre part, les moyens de commande manuelle (5) sont en position de coupure.

4. Dispositif de sécurité (6) selon l'une des revendications 1 à 3, **caractérisé en ce que** l'organe de sécurité (8) comprend une patte d'actionnement (13), et **en ce que** le corps principal (2) comporte une surface d'actionnement (14) adaptée à entrer en contact et à déplacer la patte d'actionnement (13) de façon à entraîner l'organe de sécurité (8) dans sa position d'activation quand le sous-ensemble chauffant (3) est positionné sur le corps principal (2).

5. Dispositif de sécurité (6) selon la revendication 4, **caractérisé en ce que** la patte d'actionnement (13) est mobile dans une cavité de positionnement (17) qui est limitée par une paroi principale (15) du sous-ensemble chauffant (3) et une paroi de positionnement (16) faisant saillie hors de la paroi principale (15), et **en ce que** la surface d'actionnement (14) qui est adaptée à pénétrer dans la cavité de positionnement (17), est constituée par une partie d'un épaulement (18) qui fait saillie hors du corps principal (2) et qui comporte une ouverture de positionnement (20) adaptée à recevoir la paroi de positionnement (16) quand le sous-ensemble chauffant (3) est positionné sur le corps principal (2).

6. Dispositif de sécurité (6) selon la revendication 2 ou l'une des revendications qui en dépendent, **caractérisé en ce que** l'organe de sécurité (8) comporte un doigt d'entraînement (21), et **en ce que** les moyens de commande manuelle (5) comportent une surface d'entraînement (22) adaptée à entrer en contact et à déplacer le doigt d'entraînement (21) de façon à entraîner l'organe de sécurité (8) dans sa position de verrouillage quand les moyens de commande manuelle (5) sont dans leur position d'alimentation.

7. Dispositif de sécurité (6) selon la revendication 6 dépendante de la revendication 3, **caractérisé en ce que** le doigt d'entraînement (21) est constitué par le doigt de blocage (11), et **en ce que** la surface d'entraînement (22) est une surface inclinée dont une extrémité délimite l'entrée de l'orifice de blocage (12).

8. Dispositif de sécurité (6) selon la revendication 2 ou l'une des revendications qui en dépendent, **caractérisé en ce que** l'organe de sécurité (8) comporte un ergot de verrouillage (23), et **en ce que** le corps principal (2) comporte une ouverture de verrouillage (24) adaptée à recevoir l'ergot de verrouillage (23) quand l'organe de sécurité (8) est dans sa position de verrouillage.

9. Dispositif de sécurité (6) selon la revendication 8 dépendante de la revendication 5, **caractérisé en ce que** l'ouverture de verrouillage (24) est constituée par l'ouverture de positionnement (20) qui traverse de part en part l'épaulement (18), et **en ce que** l'ergot de verrouillage (23) est adapté, quand l'organe de sécurité (8) est en position de verrouillage, à pénétrer dans l'ouverture de verrouillage (24) par un premier côté de l'épaulement (18) et à venir en butée contre la paroi de positionnement (16) qui a pénétré dans l'ouverture de verrouillage (24) par l'autre côté de l'épaulement (18).

10. Dispositif de sécurité (6) selon l'une des revendications 1 à 9, **caractérisé en ce qu'**un ressort (10) sollicite l'organe de sécurité (8) dans sa position de blocage.

11. Dispositif de sécurité (6) selon l'une des revendications 1 à 10, **caractérisé en ce que** l'organe de sécurité (8) est une pièce monobloc mobile, par rapport au sous-ensemble chauffant (3), par rotation autour d'un axe de rotation (9).

12. Dispositif de sécurité (6) selon la revendication 11, **caractérisé en ce que** les moyens de commande manuelle (5) sont montés en rotation par rapport au sous-ensemble chauffant (3) selon un axe (30) perpendiculaire à l'axe de rotation (9) de l'organe de sécurité.

13. Dispositif de sécurité (6) selon l'une des revendications 1 à 10, **caractérisé en ce que** l'organe de sécurité (8) est mobile, par rapport au sous-ensemble chauffant (3), par translation.

14. Dispositif de sécurité (6) selon l'une des revendications 1 à 10, **caractérisé en ce que** l'organe de sécurité (8) est mobile, par rapport au sous-ensemble chauffant (3), par déformation.

15. Barbecue électrique (1) comprenant un corps principal (2) et un sous-ensemble chauffant (3) amovible et adapté à être positionné sur le corps principal (2), **caractérisé en ce que** le sous-ensemble chauffant (3) comprend un dispositif de sécurité (6) selon l'une des revendications 1 à 14.

## Patentansprüche

1. Sicherheitsvorrichtung (6) eines heizbaren Teilsystems (3), welches abnehmbar eingerichtet ist, um auf einem Hauptkörper (2) eines Kochgeräts (1) angeordnet zu werden, wobei das heizbare Teilsystem (3) eine Heizeinheit (4) und manuelle Steuerungsmittel (5) der elektrischen Stromversorgung der Heizeinheit (4) umfasst, wobei die manuellen Steuerungsmittel (5) zwischen einer Abschaltposition, in welcher die elektrische Stromversorgung getrennt ist, und einer Einspeisungsposition beweglich ist, in welcher die Heizeinheit (4) eingespeist wird, **dadurch gekennzeichnet, dass** sie ein Sicherheitselement (8) umfasst, welches zwischen einer Blockierposition, in welcher die manuellen Steuerungsmittel (5) in ihrer Abschaltposition blockiert sind, und einer Aktivierungsposition beweglich sind, in welcher die manuellen Steuerungsmittel (5) gelöst sind, und welches eingerichtet ist, um mit dem Hauptkörper (2) derart zusammenzuwirken, dass, wenn das heizbare Teilsystem (3) vom Hauptkörper (2) getrennt ist, sich die Sicherheitseinheit (8) in einer Blockierposition befindet, und wenn das heizbare Teilsystem (3) auf dem Hauptkörper (2) angeordnet ist, sich die Sicherheitseinheit (8) in ihrer Aktivierungsposition befindet.

2. Sicherheitsvorrichtung (6) gemäß Anspruch 1, **dadurch gekennzeichnet, dass**, wenn das heizbare Teilsystem (3) auf dem Hauptkörper (2) angeordnet ist, die Sicherheitseinheit (8) zwischen ihrer Aktivierungsposition, in welcher das heizbare Teilsystem (3) trennbar vom Hauptkörper (2) ist, und einer Verriegelungsposition beweglich ist, in welcher das heizbare Teilsystem (3) an dem Hauptkörper (2) verriegelt ist, wobei die Sicherheitseinheit (8) eingerichtet ist, um mit den manuellen Steuerungsmitteln (5) derart zusammenzuwirken, dass, wenn sich die manuellen Steuerungsmittel (5) in ihrer Abschaltposition befinden, sich die Sicherheitseinheit (8) in ihrer Aktivierungsposition befindet, und wenn sich die manuellen Steuerungsmittel (5) in ihrer Einspeisungsposition befinden, sich die Sicherheitseinheit in ihrer Verriegelungsposition befindet.

3. Sicherheitsvorrichtung (6) gemäß Anspruch 1 oder 2, **dadurch gekennzeichnet, dass** die Sicherheitseinheit (8) einen Blockierstift (11) umfasst, und **dadurch**, dass die manuellen Steuerungsmittel (5) eine Blockieröffnung (12) umfassen, die eingerichtet ist, um den Blockierstift (11) aufzunehmen, wenn sich einerseits die Sicherheitseinheit (8) in einer Blockierposition befindet, und sich andererseits die manuellen Steuerungsmittel (5) in einer Abschaltposition befinden.

4. Sicherheitsvorrichtung (6) gemäß einem der Ansprüche 1 bis 3, **dadurch gekennzeichnet, dass** die Sicherheitseinheit (8) einen Betätigungshaken (13) umfasst, und **dadurch**, dass der Hauptkörper (2) eine Betätigungsoberfläche (14) umfasst, die eingerichtet ist, um mit dem Betätigungshaken (13) in Kontakt zu treten und derart zu verschieben, um die Sicherheitseinheit (8) in ihre Aktivierungsposition zu führen, wenn das heizbare Teilsystem (3) auf dem Hauptkörper (2) angeordnet ist.

5. Sicherheitsvorrichtung (6) gemäß Anspruch 4, **dadurch gekennzeichnet, dass** der Betätigungshaken (13) in einem Positionierhohlraum (17) beweglich ist, der durch eine Hauptwand (15) des heizbaren Teilsystems (3) und eine Positionierwand (16), die einen Vorsprung außerhalb der Hauptwand (15) bildet, abgegrenzt ist, und **dadurch**, dass die Betätigungsoberfläche (14), die eingerichtet ist, um in den Positionierungshohlraum (17) einzudringen, durch einen Teil eines Ansatzes (18) gebildet wird, der einen Vorsprung des Hauptkörpers (2) bildet und der eine Positionierungsöffnung (20) umfasst, die eingerichtet ist, um die Positionierwand (16) aufzunehmen, wenn das heizbare Teilsystem (3) auf dem Hauptkörper (2) angeordnet ist.

6. Sicherheitsvorrichtung (6) gemäß Anspruch 2 oder einem der davon abhängigen Ansprüche, **dadurch gekennzeichnet, dass** die Sicherheitseinheit (8) einen Führungsstift (21) umfasst, und **dadurch**, dass die manuellen Steuerungsmittel (5) eine Führungsoberfläche (22) umfassen, die eingerichtet ist, um mit dem Führungsstift (21) in Kontakt zu treten und derart zu verschieben, um die Sicherheitseinheit (8) in seine Verriegelungsposition zu verschieben, wenn sich die manuellen Steuerungsmittel (5) in ihrer Einspeisungsposition befinden.

7. Sicherheitsvorrichtung (6) gemäß Anspruch 6, der vom Anspruch 3 abhängt, **dadurch gekennzeichnet, dass** der Führungsstift (21) durch den Blockierstift (11) gebildet wird, und **dadurch**, dass die Führungsoberfläche (22) eine abgesenkte Oberfläche ist, von der ein Endstück den Eingang der Blockieröffnung (12) abgrenzt.

8. Sicherheitsvorrichtung (6) gemäß Anspruch 2 oder einem der davon abhängigen Ansprüche, **dadurch gekennzeichnet, dass** die Sicherheitseinheit (8) einen Verriegelungszapfen (23) umfasst, und **dadurch**, dass der Hauptkörper (2) eine Verriegelungsöffnung (24) umfasst, die eingerichtet ist, um den Verriegelungszapfen (23) aufzunehmen, wenn sich die Sicherheitseinheit (8) in ihrer Verriegelungsposition befindet.

9. Sicherheitsvorrichtung (6) gemäß Anspruch 8, abhängig von Anspruch 5, **dadurch gekennzeichnet, dass** die Verriegelungsöffnung (24) durch die Positionieröffnung (20) gebildet wird, die den Ansatz (18) vollkommen durchdringt, und **dadurch**, dass der Verriegelungszapfen (23) eingerichtet ist, dass, wenn sich die Sicherheitseinheit (8) in einer Verriegelungsposition befindet, in die Verriegelungsöffnung (24) durch eine erste Seite des Ansatzes (18) einzudringen und in einen Anschlag gegen die Positionierwand (16) zu gelangen, die in die Verriegelungsöffnung (24) durch die andere Seite des Ansatzes (18) eingedrungen ist.

10. Sicherheitsvorrichtung (6) gemäß einem der Ansprüche 1 bis 9, **dadurch gekennzeichnet, dass** eine Feder (10) die Sicherheitseinheit (8) in ihre Blockierposition zieht.

11. Sicherheitsvorrichtung (6) gemäß einem der Ansprüche 1 bis 10, **dadurch gekennzeichnet, dass** die Sicherheitseinheit (8) im Vergleich zum heizbaren Teilsystem (3) ein bewegliches Einblock-Stück ist, welches drehbar um eine Rotationsachse (9) ist.

12. Sicherheitsvorrichtung (6) gemäß Anspruch 11, **dadurch gekennzeichnet, dass** die manuellen Steuerungsmittel (5) im Vergleich zum heizbaren Teilsystem (3) gemäß einer Achse (30) drehbar angebracht sind, die senkrecht zur Rotationsachse (9) der Sicherheitseinheit ist.

13. Sicherheitsvorrichtung (6) gemäß einem der Ansprüche 1 bis 10, **dadurch gekennzeichnet, dass** die Sicherheitseinheit (8) im Vergleich zum heizbaren Teilsystem (3) durch Verschiebung beweglich ist.

14. Sicherheitsvorrichtung (6) gemäß einem der Ansprüche 1 bis 10, **dadurch gekennzeichnet, dass** die Sicherheitseinheit (8) im Vergleich zum heizbaren Teilsystem (3) durch Deformation beweglich ist.

15. Elektrisches Grillgerät (1), umfassend einen Hauptkörper (2) und ein heizbares Teilsystem (3), welches abnehmbar und eingerichtet ist, um auf dem Hauptkörper (2) angeordnet zu werden, **dadurch gekennzeichnet, dass** das heizbare Teilsystem (3) eine Sicherheitsvorrichtung (6) gemäß einem der Ansprüche 1 bis 14 umfasst.

## Claims

1. Safety device (6) on a removable heating sub-assembly (3) adapted to be positioned on a main body (2) of a cooking apparatus (1), the heating sub-assembly (3) comprising a heating part (4) and manual command means (5) for the electric supply of the heating part (4), the manual command means (5) being mobile between a cut-off position in which the electric supply is cut and a supply position where the heating part (4) is supplied, **characterised in that** it comprises a safety part (8) which is mobile between a blocking position in which the manual command means (5) are blocked in their cut-off position, and an activation position in which the manual command means (5) are unblocked, and which is adapted to work with the main body (2), such that, when the heating sub-assembly (3) is separated from the main body (2), the safety part (8) is in its blocking position, and, when the heating sub-assembly (3) is positioned on the main body (2), the safety part (8) is in its activation position.

2. Safety device (6) according to claim 2 **characterised by** the fact that when the heating sub-assembly (3) is positioned on the main body (2), the safety part (8) is mobile between its activation position in which the heating sub-assembly (3) can be separated from the main body (2), and a locking position in which the heating sub-assembly (3) is locked to the main body (2), the safety part (8) being adapted to work with the manual command means (5), such that, when the manual command means (5) are in their cut-off position, the safety part (8) is in its activation position and, when the manual command means (5) are in their supply position, the safety part (8) is in its locking position.

3. Safety device (6) according to claim 1 or 2, **characterised by** the fact that the safety part (8) comprises a blocking pin (11), and by the fact that the manual command means (5) comprise a blocking orifice (12) adapted to take the blocking pin (10) when, on one hand, the safety part (8) is in its blocking-position and when, on the other, the manual command means (5) are in their cut-off position.

4. Safety device (6) according to one of claims 1 to 3, **characterised by** the fact that the safety part (8) comprises an activation pad (13), and by the fact that the main body (2) comprises an activation surface (14) adapted to come into contact and to move the activation pad (13) in order to drive the safety part (8) in its activation position when the heating sub-assembly (3) is positioned on the main body (2).

5. Safety device (6) according to claim 4, **characterised by** the fact that the activation pad (13) is mobile in a positioning cavity (17) which is limited by a main wall (15) of the heating sub-assembly (3) and a positioning wall (16) which projects out beyond the main wall (15), and by the fact that the activation surface (14) which is adapted to penetrate into the positioning cavity (17), is formed from a shouldering part (18) which projects beyond the main body (2) and which comprises a positioning opening (20) adapted to receive the positioning wall (16) when the heating sub-assembly (3) is positioned on the main body (2).

6. Safety device (6) according to claim 2 or one of the claims depending on it, **characterised by** the fact that the safety part (8) comprises a drive pin (21), and by the fact that the manual command means (5) comprise a drive surface (22) adapted to come into contact and move the drive pin (21) in order to drive the safety part (8) in its locking position when the manual command means (5) are in their supply position.

7. Safety device (6) according to claim 6 dependant on claim 3, **characterised by** the fact that the drive pin (21) is formed by the blocking pin (11), and by the fact the drive surface (22) is an inclined surface whose extremity defines the entrance of the blocking orifice (12).

8. Safety device (6) according to claim 2 or one of the claims dependant on it, **characterised by** the fact that the safety part (8) comprises a locking lug (23), and by the fact that the main body (2) comprises a locking opening (24) adapted to take the locking lug (23) when the safety part (8) is in its locking position.

9. Safety device (6) according to claim 8 dependent on claim 5, **characterised by** the fact that the locking opening (24) is formed by the positioning opening (20) which crosses from one side to the other of the shouldering (18), and by the fact that the locking lug (23) is adapted, when the safety part (8) is in the locking position, to penetrate into the locking opening (24) by a first edge of the shouldering (18) and to stop against the positioning wall (16) which has penetrated the locking opening (24) by the other edge of the shouldering (18).

10. Safety device (6) according to one of claims 1 to 9, **characterised by** the fact that a spring (10) forces the safety part (8) into its blocking position.

11. Safety device (6) according to one of claims 1 to 10, **characterised by** the fact that the safety part (8) is a mobile single block part, in relation to the heating sub-assembly (3) rotating around a rotation axis (9).

12. Safety device according to claim 11, **characterised by** the fact that the manual command means (5) are assembled in rotation in relation to the heating sub-assembly (3) according to an axis (30) which is perpendicular to the rotation axis (9) of the safety part.

13. Safety device (6) according to one of claims 1 to 10, **characterised by** the fact that the safety part (8) is mobile, in relation to the heating sub-assembly (3), by translation.

14. Safety device (6) according to one of claims 1 to 10, **characterised by** the fact that the safety part (8) is mobile, in relation to the heating sub-assembly (3), by deformation.

15. Electric barbecue (1) comprising a main body (2) and a removable heating sub-assembly (3) adapted to be positioned on the main body (2), **characterised by** the fact that the heating sub-assembly (3) comprises a safety device (6) according to one of claims 1 to 14.
